# FASCICULE DE BREVET EUROPEEN

(11) **EP 1 272 369 B1**
(45) Date de publication et mention de la délivrance du brevet: **03.06.2009**
(21) Numéro de dépôt: 01969036.1
(22) Date de dépôt: 11.04.2001
(51) Int. Cl.: B60J 7/14, B60J 1/18

(54) **SYSTEME DE TOIT OUVRANT POUR VEHICULE DECROUVRABLE**
VORRICHTUNG EINES ÖFFNUNGFÄHIGEN DACHS FÜR CABRIO-FAHRZEUG
SLIDING ROOF SYSTEM FOR CONVERTIBLE VEHICLE

(30) Priorité: 14.04.2000 FR 0004863
(43) Date de publication de la demande: 08.01.2003
(73) Titulaire: Société Européenne de Brevets Automobiles, 75011 Paris 11 (FR)
(72) Inventeur: GUILLEZ, Jean-Marc, 79140 Cerizay (FR); QUEVEAU, Paul, 79140 Cerizay (FR); QUEVEAU, Gérard, 79140 Cerizay (FR)
(74) Mandataire: Rémont, Claude
(86) Numéro de dépôt international: PCT/FR2001/001120
(87) Numéro de publication internationale: WO 2001/079011

(56) Documents cités:
- EP-A- 0 956 990
- DE-A- 19 737 259
- US-A- 4 852 935

## Description

La présente invention concerne un système de toit ouvrant pour véhicule découvrable.

On connaît, d'après EP-A-0 956 990, un tel système de toit comportant au moins un élément de toit arrière mobile par rapport à la carrosserie du véhicule entre une position fermée et une position rangée dans le coffre arrière du véhicule. Dans cette position rangée, l'élément de toit arrière a sa concavité tournée vers le haut. L'élément de toit arrière comprend un élément central mobile par rapport audit élément de toit arrière.

Le système de toit comprend en outre des moyens de guidage dudit élément central adaptés à le maintenir sensiblement parallèle à lui-même au cours de son déplacement entre ses positions fermée et rangée, pendant le déplacement correspondant dudit élément arrière.

Pendant que l'élément de toit arrière pivote dans un premier sens par rapport à la carrosserie du véhicule, la lunette centrale pivote dans le sens opposé par rapport à l'élément de toit arrière.

Ce système de toit ouvrant conforme au préambule de la revendication 1, présente deux inconvénients :
- du fait du pivotement relatif de la lunette arrière par rapport à l'élément de toit arrière, les bords latéraux de la lunette arrière doivent être parallèles à l'axe longitudinal du véhicule ;
- pour la même raison, il est difficile d'obtenir une bonne étanchéité au niveau des points d'articulation.

La présente invention a pour but de remédier à ces inconvénients, et de proposer un système de toit ouvrant du type précité de structure simple et fiable permettant à la fois d'obtenir un guidage et un positionnement très précis de la lunette arrière dans toutes ses positions, et une excellent étanchéité sur toute la périphérie de la lunette arrière dans la position fermée du toit ouvrant.

Suivant la présente invention, le système de toit ouvrant pour véhicule découvrable du type précité est caractérisé en ce que l'élément central est relié de chaque côté du véhicule à la carrosserie par deux bras de pivotement respectivement avant et arrière et est articulé sur un axe d'articulation respectif avant et arrière porté par une extrémité respective du bras de pivotement correspondant dont l'autre extrémité respective est articulée sur la carrosserie du véhicule, lesdits bras de pivotement étant agencés de manière à guider ledit élément central jusqu'à sa position rangée, et à imposer à chacun des axes d'articulation avant et arrière suivant une trajectoire respective prédéterminée, et en ce que l'élément de toit arrière comprend de moyens adaptés à coopérer avec des moyens complémentaires dudit élément central de façon à régler le déplacement dudit élément central en fonction du déplacement d'élément de toit arriére.

Ainsi, l'élément central est libre de se déplacer par rapport à l'élément de toit arrière autour d'un axe d'articulation dont les extrémités coulissent dans les glissières précitées.

L'élément de toit arrière et l'élément central peuvent être entraînés par des moyens d'actionnement connus quelconques, par exemple par des moteurs électriques, indépendants l'un de l'autre.

Selon une version intéressante présentée en revendication 7 l'élément de toit arrière ne comportera aucun élément transversal susceptible de gêner le mouvement relatif de l'élément central par rapport aux deux parties latérales, indépendantes l'une de l'autre, de l'élément de toit arrière.

La revendication 2 présente également une version préférée de l'invention où chaque galet se déplace le long de la glissière correspondante de façon à régler le déplacement dudit élément central jusqu'à sa position rangée en fonction du déplacement de l'élément de toit arrière.

Ainsi, un seul moteur électrique entraînant l'élément de toit arrière suffit pour entraîner également l'élément central dont chaque galet est entraîné par la glissière correspondante. Le mouvement de l'élément central, qui peut être linéaire ou non, est ainsi réglé par rapport à celui de l'élément de toit arrière en fonction de la forme et de la position de chaque glissière.

D'autres particularités et avantages de la présente invention apparaîtront dans la description détaillée ci-après.

Aux dessins annexés, donnés uniquement à titre d'exemples non limitatifs :
- la figure 1 est un schéma en coupe longitudinale d'un système de toit ouvrant conforme à l'invention à ses éléments sont représentés dans leur position fermée, dans une position intermédiaire et dans leur position rangée à l'intérieur du coffre arrière du véhicule ;
- la figure 2 est une vue simplifiée semblable à la figure 1 ;
- la figure 3 est une vue partielle en coupe selon III-III à la figure 1 ;
- la figure 4 est une vue partielle en coupe selon IV-IV à la figure 1, le toit étant représenté dans sa position fermée ;
- la figure 5 est une vue partielle en coupe selon V-V à la figure 1, le toit étant représenté dans sa positionrangée;
- la figure 6 est une vue partielle en coupe selon VI-VI à la figure 1, le toit étant dans sa position rangée.

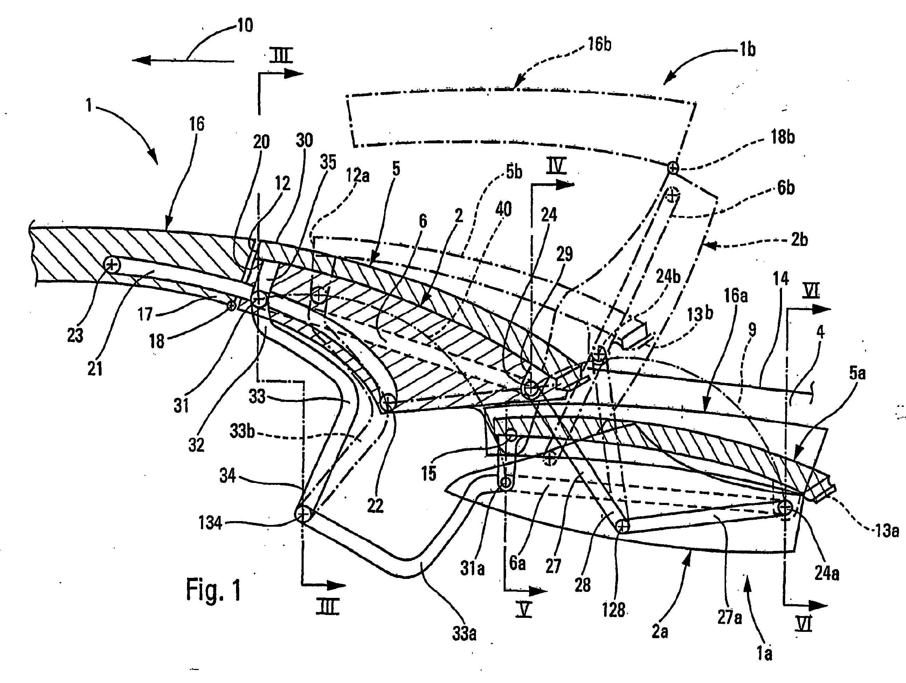

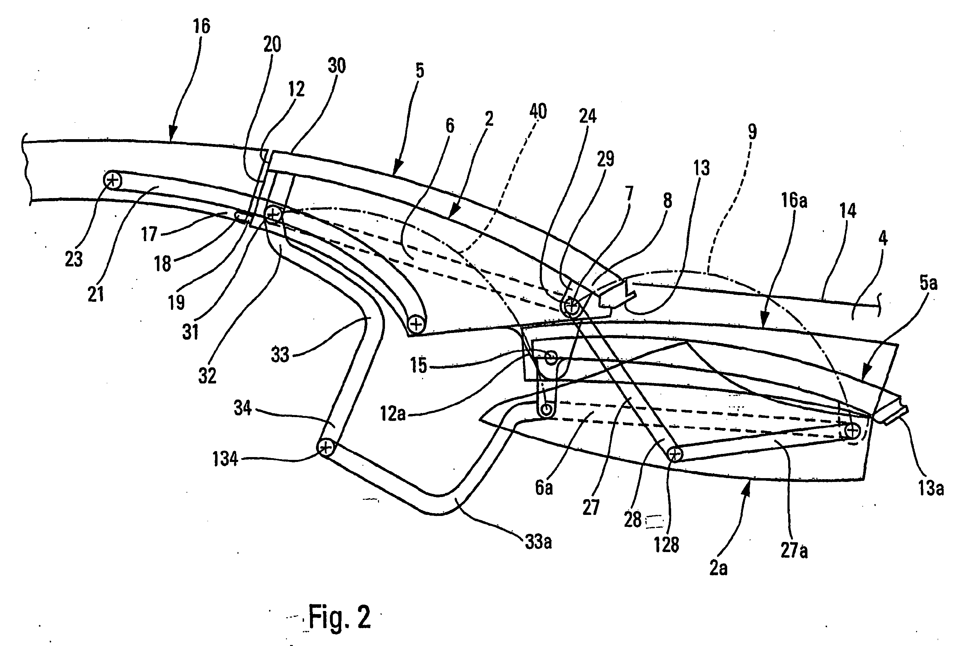

Dans le mode de réalisation représenté aux figures, le système de toit ouvrant 1 pour véhicule découvrable comporte au moins un élément de toit arrière 2 mobile par rapport à la carrosserie 3 dudit véhicule entre une position fermée et une position la rangée dans le coffre arrière 4 du véhicule, représentées en traits pleins aux figures 1 et 2.

On a également représenté en traits mixes à la figure 1 une position intermédiaire 1b du toit 1, les divers éléments constitutifs dudit toit 1 étant également référencés avec la lettre b.

Dans la position rangée la du toit 1 dans le coffre arrière 4 du véhicule, l'élément de toit arrière 2 dans sa position 2a a sa concavité tournée vers le haut.

L'élément de toit arrière 2 comprend un élément central 5 mobile par rapport audit élément de toit arrière 2.

Le système de toit 1 comprend en outre des moyens de guidage de l'élément central 5 adaptés à maintenir ledit élément central 5 sensiblement parallèle à lui-même au cours de son déplacement entre sa position fermée 5 et sa position rangée 5a dans le coffre arrière 4 pendant le déplacement correspondant de l'élément arrière 2.

Ainsi, l'élément central 5 a, dans sa position rangée 5a, sa concavité tournée vers le bas comme dans sa position fermée, de manière à occuper, avec un éventuel élément de toit avant, (voir plus loin), le volume disponible dans la concavité de l'élément de toit arrière 2 dans sa position 2a.

Suivant la présente invention, l'élément de toit arrière 2 comporte, de chaque côté du véhicule, une glissière 6 s'étendant sensiblement longitudinalement et adaptée à recevoir de manière coulissante un galet 7 respectif solidaire de l'extrémité latérale arrière 8 correspondante de l'élément central 5.

En outre, les moyens de guidage de l'élément central 5 comprennent des moyens pour obliger le galet 7 à se déplacer le long d'une trajectoire prédéterminée 9 de façon à guider ledit élément central 5 jusqu'à sa position rangée 5a.

La présente description concerne les éléments constitutifs du système de toit ouvrant suivant l'invention représentés aux figures 1 et 2 et disposés d'un même côté de la carrosserie 3 du véhicule correspondant, en l'occurrence le côté droit pour un véhicule dont l'avant est dirigé dans le sens de la flèche 10, vers la gauche aux figures 1 et 2.

Bien entendu, les mêmes éléments constitutifs sont disposés de l'autre côté du véhicule symétriquement par rapport au plan vertical longitudinal médian du véhicule parallèle au plan des figures 1 et 2.

Dans le mode de réalisation représenté, l'élément arrière 2 est constitué par deux parties latérales 11 de carrosserie, également appelées custodes, s'étendant respectivement d'un côté et de l'autre du véhicule, les deux parties 11 n'étant reliées l'une à l'autre par aucun élément transversal.

Dans le présent exemple, l'élément central 5 est constitué par la lunette arrière du véhicule, la lunette arrière s'étendant longitudinalement depuis son bord avant 12 jusqu'à son bord arrière 13 qui a en coupe longitudinal une forme de gouttière pour faciliter une liaison étanche avec le couvercle, schématisé en 14, du coffre arrière 4.

Chaque custode 11 est articulée en un point d'articulation 15 à la carrosserie 3 du côté correspondant du véhicule, le point d'articulation 15 étant évidemment ménagé de façon que la custode 2 soit auto-portante.

Dans le cas d'un élément de toit arrière 2 d'une seule pièce constituée de deux custodes 11 reliées par au moins un élément transversal (non représenté), cet élément 2 aurait ainsi une forme en arceau et serait articulé en deux points 15 sensiblement aux extrémités des branches dudit arceau.

Dans l'exemple des figures 1 et 2 , le système de toit ouvrant 1 comprend en outre un élément de toit avant 16 articulé à chacune de ses extrémités latérales arrière 17 en un point d'articulation respectif 18 porté par le bord avant 20, par exemple, par un doigt correspondant 19 en saillie vers l'avant par rapport au bord avant 20, de l'élément de toit arrière 2 ou de la custode 11 correspondante.

L'élément de toit avant 16 est en outre relié à la carrosserie 3 de chaque côté du véhicule par un bras de liaison 21 articulé à son extrémité arrière 22 sur la carrosserie 3 et à son extrémité avant 23 sur l'élément de toit avant 16.

Ainsi, lors du pivotement vers l'arrière de l'élément de toit arrière 2 ou des custodes 11, l'élément de toit avant 16 pivote autour des points d'articulation 18 et est guidé par les bras de liaison 21 de manière à rester sensiblement parallèle à lui-même pendant son déplacement entre sa position fermée et sa position rangée 16a à l'intérieur du coffre arrière 4 du véhicule, sa concavité étant tournée vers le bas comme pour la lunette arrière 5.

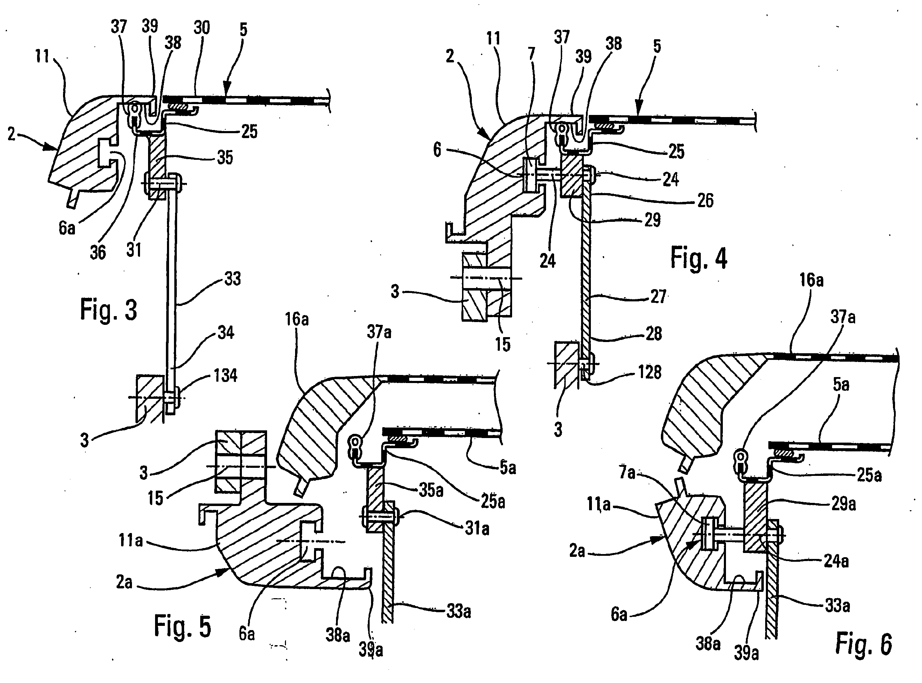

Comme schématisé aux figures 4 et 6, chaque galet 7 est monté sur un axe d'articulation arrière 24 correspondant porté par la lunette arrière 5 et par une extrémité supérieure 26 d'un bras arrière de pivotement respectif 27 dont l'autre extrémité inférieure 28 est articulée en 128 sur la carrosserie 3 du véhicule.

Pour faciliter l'aménagement de chaque glissière 6 dans la custode 2 correspondante, chaque axe d'articulation arrière 24 est porté par une patte respective 29 s'étendant vers le bas à partir de l'extrémité latérale arrière correspondante 8 de la lunette arrière 5 ou d'un renfort latéral 25 correspondant.

Comme représenté en détail aux figures 3 et 5, la lunette arrière 5 est articulée à chaque extrémité latérale avant 30 sur un axe d'articulation avant 31 porté, d'une part, par le renfort latéral correspondant 25, d'autre part, par une extrémité supérieure 32 d'un bras avant de pivotement 33 dont l'autre extrémité inférieure 34 est articulée en 134 sur la carrosserie 3 du véhicule.

Chaque axe d'articulation avant 31 est porté par une patte respective 35 s'étendant vers le bas à partir de l'extrémité latérale avant 30 de la lunette arrière 5 ou du renfort latéral 25 correspondant.

On a indiqué en 40 aux figures 1 et 2 la trajectoire dudit axe 31.

Les deux glissières 6 sont de préférence parallèles, de sorte que chaque galet 7 peut être monté fixe sur l'axe d'articulation 24 correspondant.

Dans le cas contraire, il serait possible de prévoir que l'axe 24 portant le galet 7 peut se déplacer latéralement par rapport au bras 27 correspondant qui pivote nécessairement, comme le bras avant 33, dans un plan vertical longitudinal.

Le fonctionnement du système de toit ouvrant selon le mode de réalisation que l'on vient de décrire est simple.

Un motoréducteur électrique (non représenté) ou tout autre moyen d'actionnement, par exemple hydraulique ou manuel, commande le pivotement dans un sens ou dans l'autre de chaque custode 11 ou de l'élément de toit arrière 2.

La lunette arrière 5 peut être actionnée en parallèle par un autre moyen d'actionnement indépendant du premier et commandant l'un des bras 27 ou 33. Dans ce cas, les glissières 6 et galets 7 sont inutiles et peuvent être supprimés.

Il faut toutefois veiller à maintenir la lunette arrière en permanence du même côté, par exemple du côté intérieur, des custodes ou de l'élément de toit arrière 2, pour pouvoir, dans la position fermée du toit, presser la lunette arrière 5 contre un joint tel que 37 s'étendant sur toute la longueur du bord commun à la lunette 5 et à la custode 11 ou à l'élément de toit arrière 2.

Dans le mode de réalisation représenté aux figures, chacun des bras avant 33 et des bras arrière 27 a une forme et une longueur fixes, de sorte que les trajectoires 40 et 9 sont des trajectoires circulaires.

Les bras 27,33, les axes d'articulation 31, 134, 24, 128 de la lunette arrière 5, et les custodes 11 et leur axe d'articulation 15, les glissières 6 et les galets 7 sont agencés de manière telle que, à tout moment au cours de l'ouverture ou de la fermeture du système de toit ouvrant, la lunette arrière 5 se trouve du côté des custodes 11 tourné vers l'intérieur du véhicule.

Dans ce mode de réalisation, il suffit de faire pivoter les deux custodes 11 ou l'élément de toit arrière 2 pour entraîner la lunette arrière 5 ainsi que l'élément de toit avant 16.

La glissière 6 de chaque custode oblige le galet 7 correspondant à se déplacer sur sa trajectoire 9 respective, ce qui entraîne le déplacement de la lunette arrière 5 guidée par les bras de pivotement 27, 33.

On a ainsi décrit un système de toit ouvrant pour véhicule découvrable répondant complètement aux buts précités visés par l'invention.

En effet, le système décrit ci-dessus, et en particulier l'ensemble formé de chaque côté du véhicule par les deux bras de pivotement 27, 33 et par chaque glissière 6 et son galet 7 respectif, permet de maintenir la lunette arrière 5 dans une position qui est toujours située du même côté des deux custodes latérales 11, c'est-à-dire du côté tourné vers l'intérieur du véhicule.

Ceci est vrai dans la position fermée du toit représentée aux figures 3 et 4, dans laquelle on voit que le renfort latéral 25 porte, à la partie supérieure de son bord extérieur, un joint d'étanchéité 37 qui est pressé sous la surface inférieure 38 du bord intérieur 39 de la custode 2 correspondante.

Ceci est également vrai dans la position rangée la du toit 1 à l'intérieur du coffre arrière 4, dans laquelle la concavité des custodes 11 en position 11a est tournée vers le haut et la lunette arrière 5 en position 5a est située au-dessus des surfaces intérieures 38 en position 38a (voir figures 5 et 6).

Enfin, dans la position intermédiaire repérée par la lettre b, le toit arrière en position 2b a pivoté d'environ 90° par rapport à sa position fermée 2, alors que les bras 27 et 33 n'ont pivoté que d'un angle nettement plus petit sous l'action du galet 7, porté par l'axe 24 en position 24b, qui a déjà parcouru près de la moitié de la longueur de la glissière 6.

Le renfort latéral 25, le bord extérieur 36 dudit renfort 25, le joint d'étanchéité 37 et le bord intérieur 39 de la custode 2 n'ont pas besoin d'être parallèles à l'axe longitudinal du véhicule, schématisé par la flèche 10 aux figures 1 et 2.

Il suffit que les bras de pivotement arrière 27 et avant 33 pivotent dans des plans verticaux respectifs parallèles à l'axe longitudinal du véhicule, les axes d'articulation s'étendant dans la direction transversale du véhicule perpendiculaire à cet axe longitudinal.

Les bords latéraux de la lunette arrière 5 n'ont donc pas besoin d'être parallèles audit axe longitudinal.

Bien entendu, la présente invention n'est pas limitée aux modes de réalisation que l'on vient de décrire, et on peut apporter à ceux-ci de nombreux changements et modifications sans sortir du domaine de l'invention.

## Revendications

1. Système de toit ouvrant (1) pour véhicule découvrable, comportant au moins un élément de toit arrière (2) mobile par rapport à la carrosserie (3) dudit véhicule entre une position fermée et une position rangée (2a) dans le coffre arrière (4) du véhicule, dans laquelle l'élément de toit arrière (2) a sa concavité tournée vers le haut, ledit élément de toit arrière (2) étant articulé de chaque côté de la carrosserie (3) du véhicule en un point d'articulation (15) correspondant et comprenant un élément central (5) mobile par rapport audit élément (2), le système de toit (1) comprenant en outre des moyens de guidage dudit élément central (5) adaptés à maintenir ledit élément central (5) sensiblement parallèle à lui-même au cours de son déplacement entre sa position fermée et sa position rangée (5a) dans ledit coffre arrière (4) pendant le déplacement correspondant dudit élément arrière (2), **caractérisé en ce que** l'élément central (5) est relié de chaque côté du véhicule à la carrosserie (3) par deux bras de pivotement respectivement avant (33) et arrière (27) et est articulé sur un axe d'articulation respectif avant (31) et arrière (24) porté par une extrémité respective (32, 26) du bras de pivotement correspondant (33, 27) dont l'autre extrémité respective (34, 28) est articulée sur la carrosserie (3) du véhicule, lesdits bras de pivotement (33, 27) étant agencés de manière à guider ledit élément central (5) jusqu'à sa position rangée (5a) et à imposer à chacun des axes d'articulation avant (31) et arrière (24) une trajectoire respective (40, 9) prédéterminée, et **en ce que** l'élément de toit arrière (2) comprend des moyens adaptés à coopérer avec des moyens complémentaires dudit élément central (5) de façon à régler le déplacement dudit élément central (5) en fonction du déplacement de l'élément de toit arrière (2).

2. Système de toit ouvrant selon la revendication 1, **caractérisé en ce que** les moyens complémentaires de l'élément central (5) et de l'élément de toit arrière (2) sont agencés de manière à maintenir l'élément central (5) du côté intérieur de l'élément de toit arrière (2).

3. Système de toit ouvrant selon la revendication 1 ou 2, **caractérisé en ce que** l'élément de toit arrière (2) comporte de chaque côté du véhicule une glissière (6) s'étendant sensiblement longitudinalement et adaptée à recevoir de manière coulissante un galet (7) respectif solidaire de l'extrémité latérale arrière (8) correspondante de l'élément central (5), et **en ce que** chaque galet (7) se déplace le long de la glissière (6) correspondante de façon à régler le déplacement dudit élément central (5) jusqu'à sa position rangée (5a) en fonction du déplacement de l'élément de toit arrière.

4. Système de toit ouvrant selon la revendication 3, **caractérisé en ce que** les deux glissières (6) sont parallèles.

5. Système de toit ouvrant selon la revendication 3 ou 4, **caractérisé en ce que** chaque galet (7) est monté sur l'axe d'articulation arrière (24) correspondant de l'élément central (5) porté par l'extrémité (26) du bras arrière de pivotement (27) respectif.

6. Système de toit ouvrant selon la revendication 5, **caractérisé en ce que** chaque axe d'articulation arrière (24) est porté par une patte (29) respective s'étendant vers le bas à partir de l'extrémité latérale arrière (8) correspondante de l'élément central (5).

7. Système de toit ouvrant selon l'une quelconque des revendications précédentes, **caractérisé en ce que** chaque axe d'articulation avant (31) est porté par une patte (35) respective s'étendant vers le bas à partir de l'extrémité latérale avant (30) correspondante de l'élément central (5).

8. Système de toit ouvrant selon l'une quelconque des revendications précédentes, **caractérisé en ce que** l'élément de toit arrière (2) est constitué par deux parties latérales de carrosserie (11) s'étendant respectivement d'un côté et de l'autre du véhicule, l'élément central (5) étant constitué par la lunette arrière (5).

9. Système de toit ouvrant selon l'une quelconque des revendications précedentes, **caractérisé en ce qu'**il comprend un élément de toit avant (16) articulé à chacune de ses extrémités latérales arrière (17) en un point d'articulation (18) respectif porté par un bord avant (20) de l'élément de toit arrière (2).

10. Système de toit ouvrant selon la revendication 9, **caractérisé en ce que** l'élément de toit avant (16) est en outre relié à la carrosserie (3) de chaque côté du véhicule par un bras de liaison (21) articulé à son extrémité arrière (22) sur la carrosserie (3) et à son extrémité avant (23) sur l'élément de toit avant (16).

11. Véhicule découvrable comprenant le système de toit ouvrant (1) selon l'une quelconque des revendications précédentes.

## Claims

1. An opening roof system (1) for a convertible vehicle, the system comprising at least a rear roof element (2) movable relative to the bodywork (3) of said vehicle between a closed position and a stored position (2a) in the rear trunk (4) of the vehicle where the rear roof element (2) has its concave side facing upwards, said rear roof element (2) being hinged on either side of the bodywork (3) of the vehicle at a corresponding hinge point (15) and including a central element (5) that is movable relative to said element (2), the roof system (1) further comprising guide means for guiding said central element (5) and adapted to maintain said central element (5) substantially parallel to itself during its displacement between its closed position and its stored position (5a) in said rear trunk (4) during the corresponding displacement of said rear element (2), the system being **characterized in that** the central element (5) is connected on either side of the vehicle to the bodywork (3) via two pivot arms, respectively a front arm (33) and a rear arm (27), and is hinged to respective front and rear hinge axes (31, 24) carried by respective ends (32, 26) of the corresponding pivot arms (33, 27) whose respective opposite ends (34, 28) are hinged to the bodywork (3) of the vehicle, said pivot arms (33, 27) being arranged in such a manner as to guide said central element (5) to its stored position (5a) and to impose on each of the front and rear hinge axes (31, 24) a respective predetermined path (40, 9), and **in that** the rear roof element (2) comprises means adapted to co-operate with complementary means of said central element (5) in such a manner as to control the displacement of said central element (5) as a function of the displacement of the rear roof element (2).

2. An opening roof system according to claim 1, **characterized in that** the complementary means of the central element (5) and of the rear roof element (2) are arranged so as to hold the central element (5) on the inner side of the rear roof element (2).

3. An opening roof system according to claim 1 or claim 2, **characterized in that** the rear roof element (2) has on either side of the vehicle a respective slideway (6) extending substantially longitudinally and adapted to slidably receive a respective wheel (7) secured to the corresponding rear side end (8) of the central element (5), and **in that** each wheel (7) moves along the corresponding slideway (6) in such a manner as to control the displacement of said central element (5) to its stored position (5a) as a function of the displacement of the rear roof element.

4. An opening roof system according to claim 3, **characterized in that** the two slideways (6) are parallel.

5. An opening roof system according to claim 3 or claim 4, **characterized in that** each wheel (7) is mounted on the corresponding rear hinge axis (24) of the central element (5) carried by the end (26) of the respective rear pivot arm (27) .

6. An opening roof system acorn to claim 5, **characterized in that** each rear hinge axis (24) is carried by a respective tab (29) extending downwards from the corresponding rear side end (8) of the central element (5).

7. An opening roof system according to any one of the preceding claims, **characterized in that** each front hinge axis (31) is carried by a respective tab (35) extending downwards from the corresponding front side end (30) of the central element (5).

8. An opening roof system according to any one of the preceding claims, **characterized in that** the rear roof element (2) is constituted by two bodywork side portions (11) extending on either side of the vehicle respectively, the central element (5) being constituted by the rear window (5).

9. An opening roof system according to any one of the preceding claims, **characterized in that** it has a front roof element (16) hinged at each of its rear side ends (17) at a respective hinge point (18) carried by a front edge (20) of the rear roof element (2).

10. An opening roof system according to claim 9, **characterized in that** the front roof element (16) is further connected to the bodywork (3) on either side of the vehicle by a respective connection arm (21) hinged at its rear end (22) to the bodywork (3) and at its front end (23) to the front roof element (16).

11. A convertible vehicle comprising an opening roof system (1) according to any one of the preceding claims,

## Patentansprüche

1. Dach-Öffnungssystem (1) für ein Cabriofahrzeug, mit wenigstens einem hinteren Dachelement (2), das in Bezug zu der Karosserie (3) des Fahrzeugs zwischen einer Schließposition und einer Verstauposition (2a) im hinteren Kofferraum (4) des Fahrzeugs beweglich ist, in welchem sich das hintere Dachelement (2) mit seiner Hohlfläche nach oben gedreht befindet, wobei das hintere Dachelement (2) an jeder Seite der Karosserie (3) des Fahrzeugs an einem entsprechenden Gelenkpunkt (15) angelenkt ist und ein zentrales Element (5) umfasst, das in Bezug zu dem Element (2) beweglich ist, wobei das Dachsystem (1) ferner eine Führungseinrichtung für das zentrale Element (5) umfasst, die so ausgebildet ist, dass diese das zentrale Element (5) im Wesentlichen parallel zu diesem im Verlauf seiner Verschiebung zwischen seiner Schließposition und seiner Verstauposition (5a) im hinteren Kofferraum (4) während der entsprechenden Verschiebung des hinteren Elements (2) hält, **dadurch gekennzeichnet, dass** das zentrale Element (5) an jeder Seite des Fahrzeugs mit der Karosserie (3) durch zwei Schwenkarme, jeweils vorne (33) und hinten (27) verbunden ist und über eine Gelenkachse, jeweils vorne (31) und hinten (24), die durch ein jeweiliges Ende (32, 26) des entsprechenden Schwenkarmes (33, 27) gehalten wird, angelenkt ist, deren jeweiliges andere Ende (34, 28) an der Karosserie (3) des Fahrzeugs angelenkt ist, wobei die Schwenkarme (33, 27) so angeordnet sind, dass sie das zentrale Element (5) bis in seine Verstauposition (5a) führen und jeder vorderen (31) und hinteren (24) Gelenkachse eine vorbestimmte jeweilige Bewegungsbahn (40, 9) verleihen, und dass das hintere Dachelement (2) eine Einrichtung umfasst, die so ausgebildet ist, dass sie mit komplementären Einrichtungen des zentralen Elements (5) so zusammenwirkt, dass die Verschiebung des Zentralelements (5) in Abhängigkeit von der Verschiebung des hinteren Dachelements (2) geregelt ist.

2. Dach-Öffnungssystem nach Anspruch 1, **dadurch gekennzeichnet, dass** die komplementäre Einrichtung des zentralen Elements (5) und das hintere Dachelement (2) so angeordnet sind, dass sie das zentrale Element (5) an der Innenseite des hinteren Dachelements (2) halten.

3. Dach-Öffnungssystem nach Anspruch 1 oder 2, **dadurch gekennzeichnet, dass** das hintere Dachelement (2) an jeder Seite des Fahrzeugs eine Gleitschiene (6) umfasst, die sich im Wesentlichen in Längsrichtung erstreckt und so ausgebildet ist, dass sie verschiebbar ein Gleitstück (7) aufnehmen kann, das jeweils mit einem entsprechenden hinteren seitlichen Ende (8) des zentralen Elements (5) fest verbunden ist, und dass sich jedes Gleitstück (7) entlang der entsprechenden Gleitschiene (6) so verschiebt, dass die Verschiebung des zentralen Elements (5) bis in seine Verstauposition (5a) in Abhängigkeit von der Verschiebung des hinteren Dachelements geregelt ist.

4. Dach-Öffnungssystem nach Anspruch 3, **dadurch gekennzeichnet, dass** die beiden Gleitschienen (6) parallel sind.

5. Dach-Öffnungssystem nach Anspruch 3 oder 4, **dadurch gekennzeichnet, dass** jedes Gleitstück (7) auf der entsprechenden hinteren Gelenkachse (24) des zentralen Elements (5) montiert ist, die durch das Ende (26) des jeweiligen hinteren Schwenkarms (27) getragen wird.

6. Dach-Öffnungssystem nach Anspruch 5, **dadurch gekennzeichnet, dass** jede hintere Gelenkachse (24) durch einen jeweiligen Lappen (29) getragen wird, der sich ausgehend von dem entsprechenden hinteren seitlichen Ende (8) des zentralen Elements (5) nach unten erstreckt.

7. Dach-Öffnungssystem nach einem der vorhergehenden Ansprüche, **dadurch gekennzeichnet, dass** jede vordere Gelenkachse (31) durch einen jeweiligen Lappen (35) getragen wird, der sich ausgehend von dem entsprechenden vorderen seitlichen Ende (30) des zentralen Elements (5) nach unten erstreckt.

8. Dach-Öffnungssystem nach einem der vorhergehenden Ansprüche, **dadurch gekennzeichnet, dass** das hintere Dachelement (2) durch zwei seitlich Karosseriebereiche (11) gebildet ist, die sich jeweils an der einen und anderen Seite des Fahrzeugs erstrecken, wobei das zentrale Element (5) durch die Heckscheibe (5) gebildet ist.

9. Dach-Öffnungssystem nach einem der vorhergehenden Ansprüche, **dadurch gekennzeichnet, dass** dieses ein vorderes Dachelement (16) umfasst, das an jedem seiner hinteren seitlichen Enden (17) an einem jeweiligen Gelenkpunkt (18) angelenkt ist, der von einer Vorderkante (20) des hinteren Dachelements (2) getragen wird.

10. Dach-Öffnungssystem nach Anspruch 9, **dadurch gekennzeichnet, dass** das vordere Dachelement (16) ferner mit der Karosserie (3) an jeder Seite des Fahrzeugs durch einen Verbindungsarm (21) verbunden ist, der mit seinem hinteren Ende (22) an die Karosserie (3) und mit seinem vorderen Ende (23) an dem vorderen Dachelement (16) angelenkt.

11. Aufklappbares Fahrzeug mit dem Dach-Öffnungssystem (1) nach einem der vorhergehenden Ansprüche.
